# EUROPÄISCHE PATENTSCHRIFT

(11) **EP 1 506 884 B1**
(45) Veröffentlichungstag und Bekanntmachung des Hinweises auf die Patenterteilung: **29.10.2008**
(21) Anmeldenummer: 03018188.7
(22) Anmeldetag: 09.08.2003
(51) Int. Cl.: B60C 11/13, B60C 11/24

(54) **Laufflächenprofil eines Fahrzeugluftreifens**
Tire tread of a pneumatic tire
Bande de roulement de pneu

(43) Veröffentlichungstag der Anmeldung: 16.02.2005
(73) Patentinhaber: Continental Aktiengesellschaft, 30165 Hannover (DE)
(72) Erfinder: Hanebuth, Katja, 30163 Hannover (DE)

(56) Entgegenhaltungen:
- EP-A- 0 930 179
- EP-A- 1 075 971
- EP-A- 1 637 357
- US-A- 6 105 643
- PATENT ABSTRACTS OF JAPAN vol. 1997, no. 05, 30. Mai 1997 (1997-05-30) -& JP 09 002021 A (BRIDGESTONE CORP), 7. Januar 1997 (1997-01-07)

## Beschreibung

Die Erfindung betrifft ein Laufflächenprofil eines Fahrzeugluftreifens - insbesondere eines Fahrzeugluftreifens mit Karkasse und zwischen Karkasse und Laufstreifen ausgebildetem Gürtel -. Es ist bekannt zur Erzielung von guten Traktions- und Handlingeigenschaften über den Umfang des Fahrzeugreifens erstreckte Profilblockreihen mit in Umfangsrichtung des Fahrzeugreifens hintereinander angeordneten Profilblockelementen und/oder über den Umfang des Fahrzeugreifens erstreckte Profilrippen mit in Umfangsrichtung hintereinander angeordneten quer zur Umfangsrichtung erstreckten Profilrippensegmenten auszubilden. Benachbarte Profilblockreihen und/oder Profilrippen werden dabei von einer zwischen diesen benachbarten Profilblockreihen und/oder Profilrippen ausgebildeten in ihrer Tiefe bis in den Profilgrund sich erstreckenden Profilrille getrennt. Dabei soll die Profilrille eine Entkopplung der benachbarten Profilblockreihen und/oder Profilrippen von einander zur Sicherung der Seitenführung und hydrodynamische Eigenschaften gewährleisten und Aquaplaningeffekte verhindern. Zur Sicherung der Seitenführung und guter Handlingeigenschaften ist es wünschenswert, dass das Laufflächenprofil in Querrichtung zur Umfangsrichtung über den gesamten Erstreckungsbereich der benachbarten Profilblockreihen und/oder Profilrippen und der dazwischenliegenden Profilrille steif ausgebildet ist. Hierzu ist es bekannt, die Profilblocksegmente einer ersten Profilrippe bzw. die Profilblockelemente einer ersten Profilblockreihe jeweils in einer Richtung quer zur Umfangsrichtung der Profilrippe bzw. der Profilblockreihe zwischen zwei in Umfangsrichtung hintereinander angeordnete Profilblocksegmenten der zweiten Profilrippe bzw. zwischen zwei in Umfangsrichtung hintereinander angeordneten Profilblockelementen der zweiten Profilblockreihe zu erstrecken. Eine solche Ausbildung ist beispielsweise aus der US 6,105,643 bekannt, welche als nächstliegender Stand der Technik angesehen wird, wobei dort die jeweils zur Profilrille gerichtete Flanke der angrenzenden Profilblockreihen geneigt ausgebildet sind.

Bei diesen Ausbildungen erfolgt quer zur Umfangsrichtung eine Art Verzahnung der benachbarten Profilblockreihen und/oder Profilrippen. Hierdurch wird eine hohe Biegesteifigkeit des Laufstreifen trotz trennender Profilrille erreicht. Die Verzahnung bewirkt jedoch andererseits einen der Verzahnungskontur entsprechenden Verlauf der die benachbarten Profilblockreihen und/oder Profilrippen trennenden Profilrille, welcher jedoch häufig Nachteile bei den hydrodynamischen Eigenschaften und hinsichtlich der Aquaplaningeigenschaften bewirkt. Somit ist bei der Auslegung des Laufflächenprofils derartiger Fahrzeugreifen ohne zusätzliche Maßnahmen entweder zu Gunsten einer guten Verzahnung mit hoher Biegesteifigkeit bei Inkaufnahme von Nachteilen hinsichtlich hydrodynamischen und Aquaplaning-Eigenschaften der Profilrille oder zu Gunsten einer gute Auslegung mit guten hydrodynamischen und Aquaplaning-Eigenschaften der Profilrille unter Inkaufnahme reduzierter Biegesteifigkeit aufgrund fehlender Verzahnung zu entscheiden. Die jeweils Inkauf genommenen Nachteile werden dann versucht durch zusätzliche Maßnahmen am Reifen -soweit möglich- auszugleichen.

Der Erfindung liegt die Aufgabe zugrunde einen Fahrzeugluftreifen - insbesondere einen Fahrzeugluftreifen mit Karkasse und zwischen Karkasse und Laufstreifen ausgebildetem Gürtel - zu schaffen, der sowohl eine erhöhte Steifigkeit durch Verzahnung benachbarter Profilblockreihen und/oder Profilrippen als auch eine Optimierung von hydrodynamischen und Aquaplaning-Eigenschaften im Bereich der benachbarten Profilblockreihen und/oder Profilrippen ermöglicht.

Die Aufgabe wird erfindungsgemäß durch Ausbildung des Laufflächenprofils Fahrzeugluftreifens - insbesondere eines Fahrzeugluftreifens mit Karkasse und zwischen Karkasse und Laufstreifen ausgebildetem Gürtel - mit wenigstens einer ersten Profilrille, welche eine erste Profilrippe mit in Haupterstreckungsrichtung der Profilrippe hintereinander angeordneten quer zur Haupterstreckungsrichtung der Profilrippe erstreckten Profilrippensegmenten oder eine erste Profilblockreihe mit in Haupterstreckungsrichtung der Profilblockreihe hintereinanderangeordneten quer zur Haupterstreckungsrichtung der Profilblockreihe erstreckten Profilblockelementen von einer zweiten Profilrippe mit in Haupterstreckungsrichtung hintereinanderangeordneten quer zur Haupterstreckungsrichtung der Profilrippe erstreckten Profilrippensegmenten oder einer zweiten Profilblockreihe mit in Haupterstreckungsrichtung der Profilblockreihe hintereinanderangeordneten quer zur Haupterstreckungsrichtung der Profilblockreihe erstreckten Profilblockelementen trennt, gemäß den Merkmalen des Anspruchs 1 gelöst. Dadurch, dass die Profilblocksegmente der ersten Profilrippen bzw. die Profilblockelemente der ersten Profilblockreihe sich jeweils in einer Richtung quer zur Haupterstreckungsrichtung der Profilrippe bzw. der Profilblockreihe zwischen zwei in Haupterstreckungsrichtung hintereinander angeordnete Profilblocksegmenten der zweiten Profilrippe bzw. zwischen zwei in Haupterstreckungsrichtung hintereinander angeordneten Profilblockelemente der zweiten Profilblockreihe erstrecken, wird die Verzahnung der beiden benachbarten Profilblockreihen und/oder Profilrippen mit der hierdurch erzielten Steifigkeit ermöglicht. Dadurch, dass parallel zur Haupterstreckungsrichtung der ersten Profilrippe bzw, der ersten Profilblockreihe eine zweite Profilrille mit Rillengrund ausgebildet ist, die in ihrer Tiefe kleiner als die Tiefe der ersten Profilrille ausgebildet ist und die sich längs Ihrer Haupterstreckungsrichtung quer zu ihrer Haupterstreckungsrichtung sowohl auf die Profilblocksegmente der ersten Profilrippe bzw. die Profilblockelemente der ersten Profilblockreihe als auch auf die Profilblocksegmente der zweiten Profilrippe bzw. die Profilblockelemente der zweiten Protilblockreihe erstreckt, wird trotz Verzahnung der benachbarten Profilblockreihen und/oder Profilrippen im Bereich der benachbarten Profilblockreihen und/oder Profilrippen eine hydrodynamische und hinsichtlich Aquaplaning optimierte Ausbildung durch eine hydrodynamisch und hinsichtlich Aquaplaning optimierte zweite Profilrille ohne zusätzliche Maßnahmen möglich. Zusätzliche Maßnahmen am Reifen, die bislang lediglich dem Ausgleich der durch die Verzahnung bedingten hydrodynamischen oder Aquaplaning-Nachteile oder der durch hydrodynamisch und Aquaplaning-optimierten Rillen bedingten Steifigkeits-Nachteile dienten, können bei einer derartigen Ausgestaltung zu zusätzlicher Verbesserung dieser Eigenschaften eingesetzt werden.

Darüber hinaus kann hierdurch eine Minimierung von Abriebsproblemen im Bereich der Blockspitzen ermöglicht werden.

Besonders vorteilhaft ist die Ausbildung gemäß den Merkmalen von Anspruch 2, bei der die Haupterstreckungsrichtung zumindest der ersten Profilrippe bzw. der ersten Profilblockreihe und der zweiten Profilrille die Umfangsrichtung des Fahrzeugluftreifens ist, wodurch bei vorteilhafter in Umfangsrichtung des Fahrzeugluftreifens erstreckter Profilblockreihe oder Profilrippe die Hydrodynamik und Aquaplaningeigenschaft, insbesondere Aquaplaning längs, einer sonst benachbarte Profilblockreihen und/oder Profilrippen trennenden reinen Umfangsrille trotz Verzahnung der benachbarten Profilblockreihen und/oder Profilrippen ermöglicht wird.

Durch die Ausbildung gemäß den Merkmalen des Anspruchs 3, bei dem die Haupterstreckungsrichtung sowohl der ersten Profilrippe bzw. der ersten Profilblockreihe und der zweiten Profilrille als auch die Haupterstreckungsrichtung der zweiten Profilrippe bzw. zweiten Profilblockreihe die Umfangsrichtung des Fahrzeugluftreifens ist, wird bei vorteilhafter in Umfangsrichtung des Fahrzeugluftreifens erstreckter benachbarter Profilblockreihen und/oder Profilrippen die Hydrodynamik und Aquaplaningeigenschaft, insbesondere Aquaplaning längs, einer sonst derartig benachbarte Profilblockreihen und/oder Profilrippen trennenden reinen Umfangsrille trotz Verzahnung der benachbarten Profilblockreihen und/oder Profilrippen ermöglicht.

Die Ausbildung gemäß den Merkmalen des Anspruchs 4, wobei der Verlauf der Rillenwände der zweiten Profilrille geradlinig in Haupterstreckungsrichtung der zweiten Profilrille ausgebildet ist , ist eine hinsichtlich der hydrodynamischen und Aquaplaning-Eigenschaften besonders vorteilhafte Ausbildung.

Die Merkmale der Ansprüche 5 und 6 stellen besonders vorteilhafte Ausbildungen des Profilrillenquerschnitts der zweiten Profilrille dar.

Die Ausbildung gemäß den Merkmalen des Anspruchs 7 ermöglicht eine einfache Integration von Markierungen zur Profiltiefenerkennung.

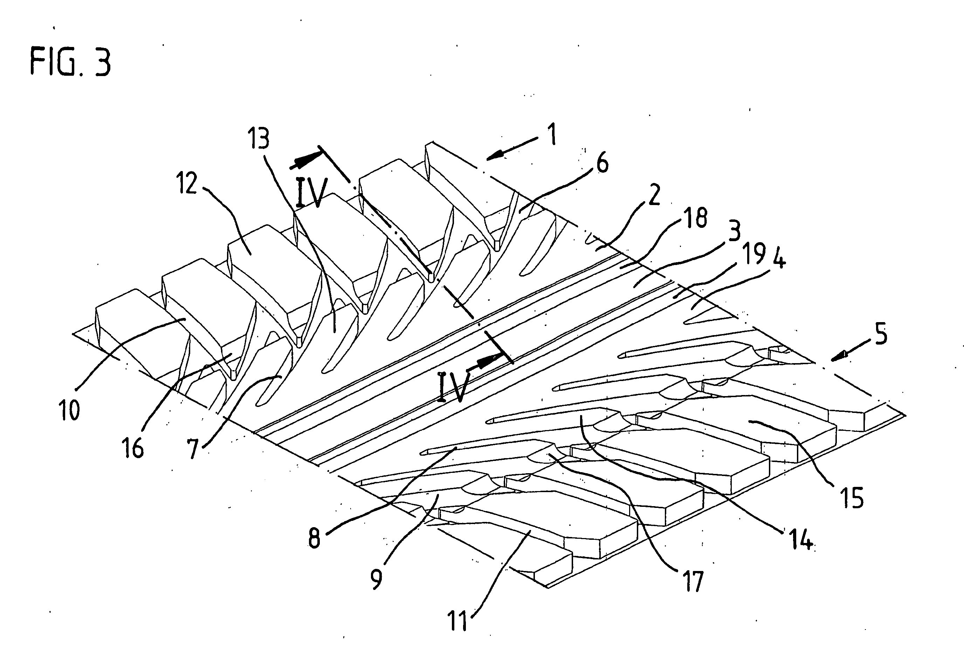

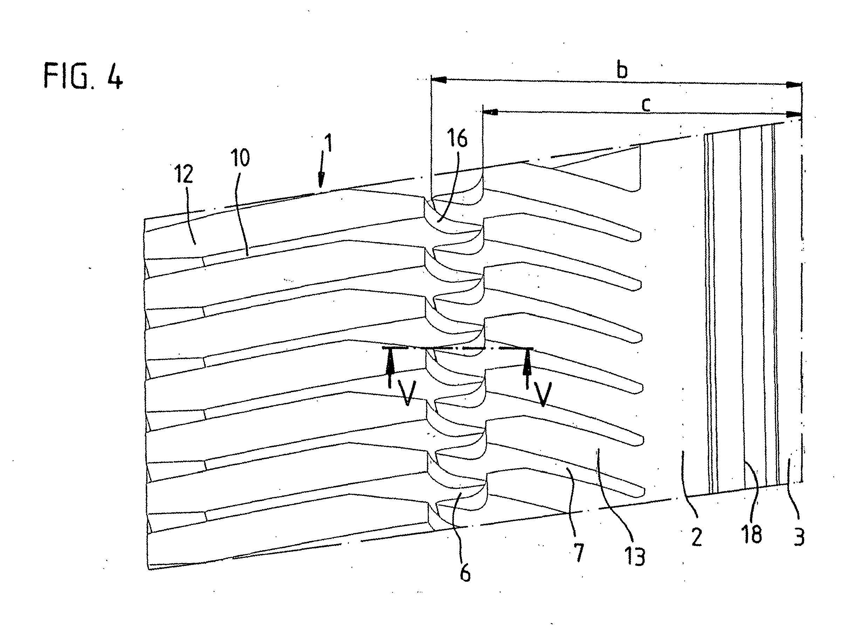

Die Erfindung wird im folgenden anhand der in den Figuren 1 bis 7 dargestellten Ausführungsbeispiele näher erläutert. Hierin zeigen
- Fig. 1: Querschnitt eines Fahrzeugluftreifens mit erfindungsgemäßem Laufflächenprofil gemäß Schnittdarstellung I-I von Fig.2,
- Fig. 2: Draufsicht auf einen Umfangsabschnitt des erfindungsgemäßen Laufflächenprofil gemäß Ansicht II-II von Fig.1,
- Fig. 3: perspektivische Darstellung eines Umfangsabschnitts des erfindungsgemäßen Laufflächenprofils in abgewickelter Darstellung,
- Fig. 4: Vergrößerte Ausschnittsdarstellung des erfindungsgemäßen Laufflächenprofils gemäß Ansicht IV-IV von Fig.3,
- Fig. 5: Schnittdarstellung der zweiten Profilrille gemäß Schnitt V-V von Fig. 4 zur Darstellung des Konturverlaufs in einer ersten Ausführungsform mit abgerundeten Übergängen,
- Fig. 6: Schnittdarstellung der zweiten Profilrille zur Darstellung des Konturverlaufs in einer zweiten Ausführungsform mit eckigen Übergängen,
- Fig. 7: Schnittdartellung der zweiten Profilrille zur Darstellung des Konturverlaufs in einer weiteren Ausführungsform mit Profiltiefenmarkierung.

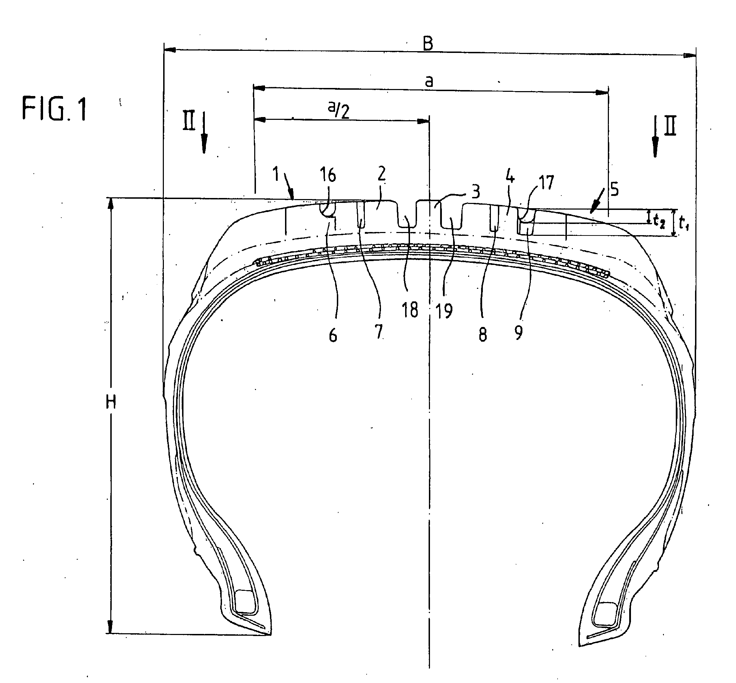

In Fig. 1 ist der herkömmliche Aufbau eines Fahrzeugluftreifens für Personenkraftwagen beispielhaft dargestellt, bei dem um einen Kern mit Kemprofil eine Karkasslage außerhalb einer dichten Innenschicht über den rechten Schulterbereich , über die Zenitebene zu dem linken Schulterbereich und dem linken Kern mit Kemprofil reicht, um den sie in herkömmlicher Weise gelegt ist. In herkömmlicher Weise ist ausgehend vom Kernbereich bis zum Schulterbereich des Reifens jeweils ein Seitenstreifen aus Kautschuk auf die Karkasslage aufgelegt. Über den Umfang des Reifens reichen außerhalb der Karkasslagen radialer Bauart in herkömmlicher Weise angeordnet eine oder mehrere Stahlgürtellagen mit in Kautschuk eingebetteten Stahlcorden. Den Abschluss den Reifenaufbaus bildet in bekannter Weise ein Laufstreifen mit Laufstreifenprofil.

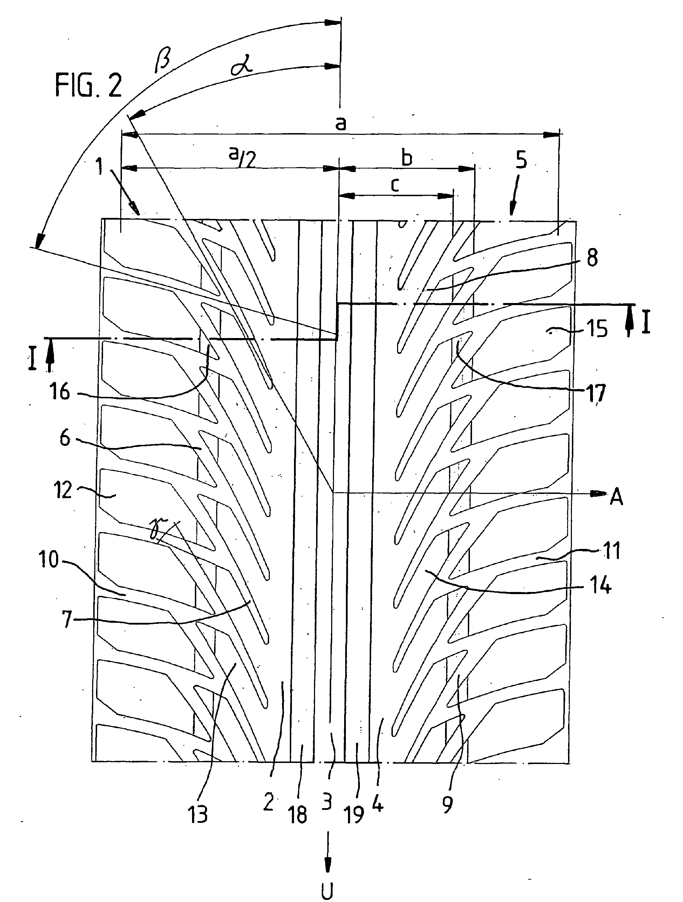

In den Figuren 1 und 2 ist die Breite der Reifenaufstandsfläche mit a dargestellt, welche sich von der Äquatorialebene axial in beide Richtungen um (a/2) nach außen erstreckt. Das Reifenprofil weist im Kronenbereich eine zentrale Umfangsrippe 3 auf, welche sich über den gesamten Umfang des Reifens erstreckt. Axial beiderseits der zentralen Umfangsrippe 3 schließt sich jeweils eine Umfangsrille 18 bzw. 19 an, welche sich in Umfangsrichtung über den gesamten Umfang des Reifens erstreckt. An die Umfangsrillen 18 bzw. 19 schließen sich in axialer Richtung nach außen unmittelbar jeweils eine Profilrippe 2 bzw. 4 an, welche sich in Umfangsrichtung über den gesamten Umfang des Reifens erstrecken. Die Seitenwände der Umfangsrillen 18 und 19 sind geradlinig in Umfangsrichtung ausgerichtet. Die Profilrippen 2 und 4 sind jeweils an ihrer von der zentralen Profilrippe 3 wegweisenden axialen Außenseite mit in Umfangsrichtung des Reifens hintereinander verteilt angeordneten Profilrippensegmenten 13 bzw. 14 ausgebildet, welche jeweils von den in Umfangsrichtung benachbarten Profilrippensegmenten 13 bzw. 14 durch eine unter einem spitzen Winkel α zu der in Gegenrichtung zu der in die Figuren als Abrollrichtung mit Pfeil eingetragenen Umfangsrichtung U orientierten Umfangsrichtung verlaufende Schrägrille 7 bzw. 8 getrennt sind und sich axial bis in einen axialen Abstand b von der Äquatorialebene hinaus erstrecken. α ist beispielsweise zwischen 30° und 40° zur Umfangsrichtung gewählt. Von der Profilrippe 3 aus nach axial außen gesehen wird die Profilrippe 2 durch eine zick-zack-förmige trennende Rille 6 von einer sich axial nach außen anschließenden Profilblockreihe 1 getrennt. Die Profilblockreihe 1 ist mit über den Umfang verteilt in Umfangsrichtung hintereinander angeordneten Profilblockelementen 12 ausgebildet, welche jeweils voneinander durch eine Querrille 10 voneinander getrennt sind. Ebenso wird von der Profilrippe 3 aus nach axial außen gesehen die Profilrippe 4 durch eine zick-zack-förmige trennende Rille 9 von einer sich axial nach außen anschließenden Profilblockreihe 5 getrennt. Die Profilblockreihe 5 ist mit über den Umfang des Reifens verteilt in Umfangsrichtung hintereinander angeordneten Profilblockelementen 15 ausgebildet, welche jeweils voneinander durch eine Querrille 11 getrennt sind.

Die Profilblockreihen 1 bzw. 5 reichen axial bis in den Schulterbereich bis außerhalb der Reifenaufstandsfläche. Die Querrillen 10 bzw. 11 verlaufen unter einem spitzen Winkel ß zu der in Gegenrichtung zu der in die Figuren als Abrollrichtung mit Pfeil eingetragenen Umfangsrichtung U orientierten Umfangsrichtung, wobei ß größer als der Winkel α gewählt ist und kontinuierlich mit wachsendem axialen Abstand zur Profilrippe 3 zunimmt. Die zick-zack-förmigen trennenden Umfangsrillen 6 bzw. 9 erstrecken sich in Umfangsrichtung ausgerichtet über den gesamten Umfang des Fahrzeugluftreifens, weisen jedoch in axialer Richtung einen zick-zack-förmigen Verlauf auf. Hierdurch erstrecken sich die von der zick-zack-förmigen trennenden Profilrille 6 axial nach innen begrenzten spitz auslaufenden Profilblockelemente 12 der Profilblockreihe 1 nach axial innen, bis in einen Abstand c von der Äquatorialebene und die von der zick-zack-förmigen trennenden Rille 6 axial außen begrenzten spitz auslaufenden Profilrippensegmente 13 bis in eine axiale Position im Abstand b von der Äquatorialebene. Ebenso erstrecken sich die von der zick-zack-förmigen trennenden Profilrille 9 axial nach innen begrenzten spitz auslaufenden Profilblockelemente 15 der Profilreihe 5 bis in eine Position im Abstand c von der Äquatorialebene und die von der zick-zack-förmigen Profilrille 9 axial nach außen begrenzten spitz auslaufenden Profilrippensegmente 14 bis in eine Position im Abstand b von der Äquatorialebene. Der Abstand b ist dabei größer als der Abstand c. Somit überschneiden sich die Ausläufe der Profilrippensegmente 13 bzw. 14 mit den Ausläufen der Profilblockelemente 12 bzw. 15 axial über einen Erstreckungsbereich (b - c). Auf diese Weise erfolgt eine Verzahnung der Profilrippe 2 mit der Profilblockreihe 1 einerseits und eine Verzahnung der Profilblockreihe 5 mit der Profilrippe 4 andererseits.

Die zick-zack-förmigen trennenden Rillen 6, 9 sind ebenso wie die Schrägrillen 7, 8 und die Querrillen 10, 11 sowie die Umfangsrillen 18, 19 in ihrer radialen Erstreckung mit einer Tiefe t1, welche bis zum Profilgrund reicht, ausgebildet.

Im axialen Verzahnungsbereich zwischen Profilrippensegmenten 13, 14 einerseits und Profilblocksegmenten 12, 15 andererseits ist jeweils eine über den gesamten Umfang des Fahrzeugluftreifens sich erstreckende zweite Profilrille 16 bzw. 17 ausgebildet, die in ihrem Rillengrund in Umfangsrichtung geradlinig verlaufend ausgebildet ist und sich axial aus einer axialen Position im Abstand c von der Äquatorialebene bis zur axialen Position im Abstand b von der Äquatorialebene erstreckt. Diese zweite Profilrille 16 bzw. 17 ist in ihrer radialen Erstreckung lediglich bis in eine Tiefe t2 ausgebildet, wobei t2 kleiner t1 ist. Beispielsweise ist t2 so gewählt, dass gilt: ((113)·t1 ≤ t2 ≤ (2/3) ·t1).

Am dargestellten Beispiel von Fig. 1 sowie der Figuren 5, 6 und 7 gilt t2 = ½ · t1.

Die Rillen 16 bzw. 17 sind in ihrer Breite (b - c) so gewählt, dass ihre Breite (b - c) größer ist als die Breite der zick-zack-förmigen trennenden Rille 6 bzw. 9, wobei die Breite der zick-zack-förmigen Rille in jeder Position jeweils dem Abstand zwischen dem an dieser Position angrenzenden Profilblockelement 12 und dem an dieser Position angrenzenden Profilrippensegment 13 bzw. dem Abstand zwischen dem dem an dieser Position angrenzenden Profilblockelement 15 und dem dem an dieser Position angrenzenden Profilrippensegment 14 entspricht.

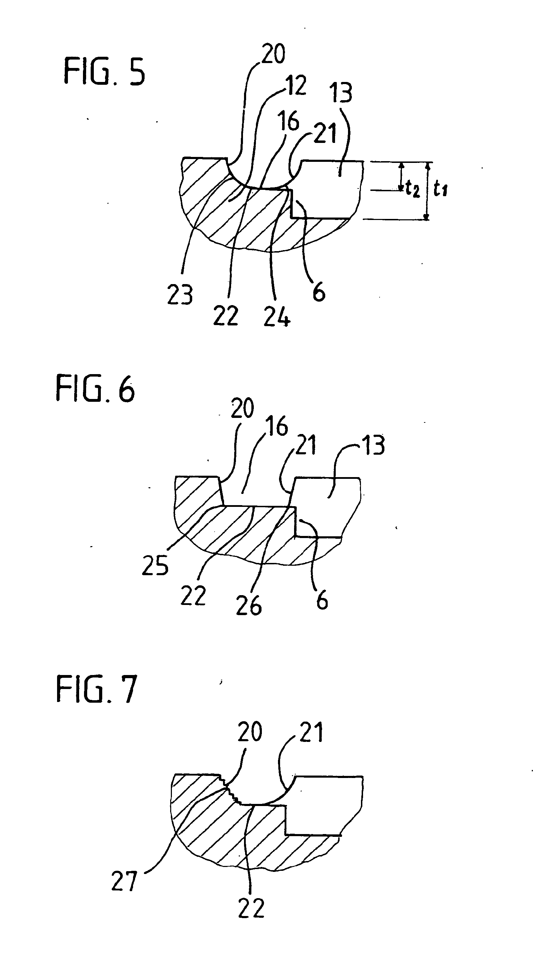

Wie in Fig. 5 am Beispiel der in Umfangsrichtung ausgebildeten zweiten Profilrille 16 dargestellt ist, sind die Profilrillen 16 bzw. 17 in radialer Richtung in einer Tiefe t2 von der radialen Außenfläche der benachbarten Profilblockelemente 12 und Profilrippensegmente 13 mit einem Profilrillengrund 22 ausgebildet. Die Profilrille 16 ist zur einen quer zur Erstreckungsrichtung der Rille die Rille begrenzenden Seite mit einer Rillenwand 20 und zur anderen quer zur Erstreckungsrichtung der Rille die Rille begrenzenden Seite mit einer Rillenwand 21 begrenzt. Die Rillenwände 20 bzw. 21 können dabei in rein radialer Richtung radial nach außen verlaufend ausgebildet sein. Es ist auch möglich - wie in Fig. 5 dargestellt - die Rillenwände 20 und 21 mit einem kleinen Neigungswinkel von beispielsweise bis zu 5° zur Radialen auszubilden, so dass die Rille nach radial außen erweitert wird. Beispielsweise beträgt der Neigungswinkel 1° zur Radialen. Der Übergang zwischen den Rillenwänden 20 und 21 zum ebenen Profilrillengrund kann dabei, wie in Fig. 5 dargestellt ist, als abgerundeter Übergang 23, 24 oder aber, wie in Fig. 6 dargestellt ist, als eckiger Übergang 25 bzw. 26 ausgebildet sein.

Es ist denkbar eine oder beide Rillenwände 20,21 der zweiten Profilrille 16 bzw. 17 mit Markierungen bekannter Art zur Erkennung der Profiltiefe auszubilden. Beispielsweise kann hierzu, wie in Fig. 7 dargestellt ist, eine Rillenwand 20 mit zur Markierung dienenden geringfügigen Abstufungen 27 versehen sein, die sich über die gesamte Länge der Rillenwand in Umfangsrichtung des Reifens erstrecken oder lediglich umfangssegmentartig in einer oder mehreren Umfangspositionen der zweiten Profilrille ausgebildet sind.

In den Figuren ist diese zweite Profilrille 16 bzw. 17 jeweils mit ihrer Rillenwand so ausgebildet, dass am Beispiel der Profilrille 16 die eine Rillenwand 20 lediglich in den Profilblockelementen 12 ausgebildet ist, wobei das Profilrippensegment 13 auf dieser Rillenseite in der Tiefe t2 des Profilrillengrundes ausläuft, und die Rillenwand 21 lediglich in den Profilrippensegmenten 13 ausgebildet ist, wobei die Profilblockelemente 12 auf dieser Rillenseite in der Tiefe t2 des Profilrillengrundes auslaufen. Dies ist bei einer Ausbildung mit - wie dargestellt - unter Neigungswinkel zur Radialen verlaufenden Rillenwänden mit geringem Neigungswinkel, bei dem, wie in den Ausführungen dargestellt, sowohl die Profilblockelemente 12 sich axial nach innen bis in den Abstand c von der Äquatorialebene hin erstrecken als auch die Profilrille 16 mit schräg verlaufender Rillenwand 21 an ihrem radial äußeren Ende im Abstand c von der Äquatorialebene beginnt und bei dem sowohl die Profilrippensegmente 13 sich in ihrem axial äußeren Auslauf bis in einen Abstand b von der Äquatorialebene erstrecken als auch die Rillenwand 20 an ihrem radial äußeren Ende im Abstand b mit schräg verlaufender Rillenwand 20 beginnt, sinnvoll.

Bei Ausbildung mit axialer Erstreckung der Profilrippensegmente 13 nach axial außen über den Abstand b von der Äquatorialebene hinaus bzw. bei axialer Erstreckung der Profilblockelemente 12 nach axial innen über eine Position im Abstand c von der Äquatorialebene, in der die Rille begrenzt wird, hinaus ist es auch denkbar, die Rillenwand 21 und die Rillenwand 20 sowohl in den Profilblockelementen 12 als auch in den Profilrippensegmenten 13 auszubilden.

Der dargestellt Fahrzeugluftreifen ist schlauchlos und hat ein Verhältnis aus maximaler Höhe H zu maximaler Breite von H/B ≤ 0,8. Beispielsweise wurde das Verhältnis gewählt: H/B=0,6.

### Bezugszeichenliste

### (Teil der Beschreibung)

- 1: Profilblockreihe
- 2: Profilrippe
- 3: Profilrippe
- 4: Profilrippe
- 5: Profilblockreihe
- 6: Erste trennende Rille
- 7: Schrägrille
- 8: Schrägrille
- 9: Erste trennende Rille
- 10: Querrille
- 11: Querrille
- 12: Profilblockelement
- 13: Profilrippensegment
- 14: Profilrippensegment
- 15: Profilblockelement
- 16: Zweite Profilrille
- 17: Zweite Profilrille
- 18: Umfangsrille
- 19: Umfangsrille
- 20: Rillenwand
- 21: Rillenwand
- 22: Rillengrund
- 23: Übergang
- 24: Übergang
- 25: Übergang
- 26: Übergang
Abstufung

## Patentansprüche

1. Laufflächenprofil eines Fahrzeugluftreifens - insbesondere eines Fahrzeugluftreifens mit Karkasse und zwischen Karkasse und Laufstreifen ausgebildetem Gürtel-,
- mit wenigstens einer ersten Profilrille (6,9), welche eine erste Profilrippe (2,4) mit in Haupterstreckungsrichtung der Profilrippe (2,4) hintereinander angeordneten quer zur Haupterstreckungsrichtung der Profilrippe (2,4) erstreckten Profilrippensegmenten (13,14) oder eine erste Profilblockreihe mit in Haupterstreckungsrichtung der Profilblockreihe hintereinander angeordneten quer zur Haupterstreckungsrichtung der Profiilblockreihe erstreckten Profilblockelementen von einer zweiten Profilrippen mit in Haupterstreckungsrichtung hintereinander angeordneten quer zur Haupterstreckungszichtung der Profilrippe erstreckten Profilrippensegmenten oder einer zweiten Profilblockreihe (1,5) mit in Haupterstreckungsrichtung der Profilblockreihe (1,5) hintereinander angeordneten quer zur Haupterstreckungsrichtung der Profilblockreihe (1,5) erstreckten Profilblockelementen (12,15) trennt,
- wobei die Profilblocksegmente (13,14) der ersten Profilrippen (2,4) bzw. die Profilblockelemente der ersten Profilblockreihe sich jeweils in einer Richtung quer zur Haupterstreckungsrichtung der Profilrippe (2,4) bzw. der Profilblockreihe zwischen zwei in Haupterstreckungsrichtung hintereinander angeordnete Profilblocksegmenten der zweiten Profilrippe bzw. zwischen zwei in Haupterstreckungsrichtung hintereinander angeordneten Profilblockelemente (12,15) der zweiten Profilblockreihe (1,5) erstrecken, und
- wobei parallel zur Haupterstreckungsrichtung der ersten Profilrippe (2,4) bzw, der ersten Profilblockreihe eine zweite Profilrille (16,17) mit Rillengrund ausgebildet ist, die in ihrer Tiefe t2 kleiner als die Tiefe t1 der ersten Profilrille (6,9) ausgebildet ist und die sich längs Ihrer Haupterstreckungsrichtung quer zu ihrer Haupterstreckungsrichtung sowohl auf die Profilblocksegmente (13,14) der ersten Profilrippe (2,4) bzw. die Profilblockelemente der ersten Profilblockreihe als auch auf die Profilblocksegmente der zweiten Profilrippe bzw. die Profilblockelemente (12,15) der zweiten Profilblockreihe (1,5) erstreckt.

2. Laufflächenprofil eines Fahrzeugluftreifens gemäß den Merkmalen des Anspruchs 1,
- wobei die Haupterstreckungsrichtung zumindest der ersten Profilrippe (2,4) bzw. der ersten Profilblockreihe und der zweiten Profilrille (16,17) die Umfangsrichtung des Fahrzeugluftreifens ist.

3. Laufflächenprofil eines Fahrzeugluftreifens gemäß den Merkmalen des Anspruchs 2,
- bei dem die Haupterstreckungsrichtung sowohl der ersten Profilrippe (2,4) bzw. der ersten Profilblockreihe und der zweiten Profilrille (16,17) als auch die Haupterstreckungsrichtung der zweiten Profilrippe bzw. Profilblockreihe (1,5) die Umfangsrichtung des Fahrzeugluftreifens ist.

4. Laufflächenprofil eines Fahrzeugluftreifens gemäß den Merkmalen von einem oder mehreren der vorangegangenen Ansprüche,
- wobei der Verlauf der Rillenwände (20,21) der zweiten Profilrille (16,17) geradlinig in Haupterstreckungsrichtung der zweiten Profilrille (16,17) ausgebildet ist.

5. Laufflächenprofil eines Fahrzeugluftreifens gemäß den Merkmalen von einem oder mehreren der vorangegangenen Ansprüche,
- wobei die zweite Profilrille (16,17) im Schnitt quer zur Haupterstreckungsrichtung der zweiten Profilrille (16,17) im Übergang zwischen zumindest einer Rillenseitenwand (20,21) und dem Rillengrund (22) mit einer abgerundeten Kontur ausgebildet ist.

6. Laufflächenprofil eines Fahrzeugluftreifens gemäß den Merkmalen von einem oder mehreren der Ansprüche 1 bis 4,
- wobei die zweite Profilrille (16,17) im Schnitt quer zur Haupterstreckungsrichtung der zweiten Profilrille (16,17) im Übergang zwischen zumindest einer Rillenseitenwand (20,21) und dem Rillengrund (22) mit einer eckigen Kontur ausgebildet ist.

7. Laufflächenprofil eines Fahrzeugluftreifens gemäß den Merkmalen von einem oder mehreren der vorangegangenen Ansprüche,
- bei dem in wenigstens einer Rillenseitenwand (20,21) der zweiten Profilrille (16,17) Markierungen (27) zur Überprüfung der Profiltiefe ausgebildet sind.

## Claims

1. Tyre tread profile of a vehicle pneumatic tyre - in particular of a vehicle pneumatic tyre having a carcass and a belt which is formed between the carcass and the running strip,
- having at least one first profile channel (6,9) which separates a first profile rib (2,4) with profile rib segments (13,14) which are arranged in series in the main direction of extent of the profile rib (2,4) and which extend transversely with respect to the main direction of extent of the profile rib (2,4), or a first profile block row with profile block elements which are arranged in series in the main direction of extent of the profile block row and which extend transversely with respect to the main direction of extent of the profile block row, from a second profile rib with profile rib segments which are arranged in series in the main direction of extent and which extend transversely with respect to the main direction of extent of the profile rib, or a second profile block row (1,5) with profile block elements (12,15) which are arranged in series in the main direction of extent of the profile block row (1,5) and which extend transversely with respect to the main direction of extent of the profile block row (1,5),
- with the profile block segments (13,14) of the first profile rib (2,4) or the profile block elements of the first profile block row extending in each case in a direction transversely with respect to the main direction of extent of the profile rib (2,4) or of the profile block row between two profile block segments, which are arranged in series in the main direction of extent, of the second profile rib, or between two profile block elements (12,15), which are arranged in series in the main direction of extent, of the second profile block row (1,5), and
- with a second profile channel (16,17), which has a channel base, being formed parallel to the main direction of extent of the first profile rib (2,4) or of the first profile block row, which second profile channel (16,17) has a depth t2 which is smaller than the depth t1 of the first profile channel (6,9), and which second profile channel (16,17), along its main direction of extent, extends transversely with respect to its main direction of extent both onto the profile block segments (13,14) of the first profile rib (2,4) or onto the profile block elements of the first profile block row, and also onto the profile block segments of the second profile rib or onto the profile block elements (12,15) of the second profile block row (1,5).

2. Tyre tread profile of a vehicle pneumatic tyre according to the features of Claim 1,
- with the main direction of extent at least of the first profile rib (2,4) or of the first profile block row and of the second profile channel (16,17) being the circumferential direction of the vehicle pneumatic tyre.

3. Tyre tread profile of a vehicle pneumatic tyre according to the features of Claim 2,
- in which the main direction of extent both of the first profile rib (2,4) or of the first profile block row and of the second profile channel (16,17) and also the main direction of extent of the second profile rib or profile block row (1,5) being the circumferential direction of the vehicle pneumatic tyre.

4. Tyre tread profile of a vehicle pneumatic tyre according to the features of one or more of the preceding claims,
- with the course of the channel walls (20,21) of the second profile channel (16,17) being formed so as to be rectilinear in the main direction of extent of the second profile channel (16,17).

5. Tyre tread profile of a vehicle pneumatic tyre according to the features of one or more of the preceding claims,
- with the second profile channel (16,17) being formed, in section transversely with respect to the main direction of extent of the second profile channel (16,17), with a rounded contour at the transition between at least one channel side wall (20,21) and the channel base (22).

6. Tyre tread profile of a vehicle pneumatic tyre according to the features of one or more of Claims 1 to 4,
- with the second profile channel (16,17) being formed, in section transversely with respect to the main direction of extent of the second profile channel (16,17), with an angular contour at the transition between at least one channel side wall (20,21) and the channel base (22).

7. Tyre tread profile of a vehicle pneumatic tyre according to the features of one or more of the preceding claims,
- in which marks (27) for checking the profile depth are formed in at least one channel side wall (20,21) of the second profile channel (16,17).

## Revendications

1. Profil de surface de roulement pour bandage pneumatique de véhicule, en particulier un bandage pneumatique de véhicule doté d'une carcasse et d'une ceinture formée entre la carcasse et la bande de roulement, qui présente au moins une première rainure de profil (6, 9) qui sépare
une première nervure de profil (2, 4) qui présente des segments (13, 14) de nervure de profil disposés les uns derrière les autres dans la direction d'extension principale de la nervure de profil (2, 4) et qui s'étendent transversalement à la direction d'extension principale de la nervure de profil (2, 4) ou une première série de blocs de profil qui présente des éléments de bloc de profil disposés les uns derrière les autres dans la direction d'extension principale de la série de blocs de profil et qui s'étendent transversalement à la direction d'extension principale de la série de blocs de profil
d'une deuxième nervure de profil qui présente des segments de nervure de profil disposés les uns derrière les autres dans la direction d'extension principale et qui s'étendent transversalement par rapport à la direction d'extension principale de la nervure de profil ou d'une deuxième série (1, 5) de blocs de profil qui présente des éléments (12, 15) de bloc de profil disposés les uns derrière les autres dans la direction d'extension principale de la série (1, 5) de blocs de profil et qui s'étendent transversalement par rapport à la direction d'extension principale de la série (1, 5) de blocs de profil,
les segments (13, 14) de bloc de profil de la première nervure de profil (2, 4) ou les éléments de bloc de profil de la première série de blocs de profil s'étendant tous dans une direction transversale par rapport à la direction d'extension principale de la nervure de profil (2, 4) ou de la série de blocs de profil entre deux segments de bloc de profil disposés les uns derrière les autres dans la direction d'extension principale de la deuxième nervure de profil ou entre deux éléments (12, 15) de blocs de profil de la deuxième rangée (1, 5) de blocs de profil disposés l'un derrière l'autre dans la direction d'extension principale,
tandis que parallèlement à la direction de l'extension principale de la première nervure de profil (2, 4) ou de la première rangée de blocs de profil, une deuxième rainure de profil (16, 17) présente un fond de rainure dont la profondeur t2 est inférieure à la profondeur t1 de la première rainure de profil (6, 9) et qui s'étend le long de sa direction d'extension principale transversalement par rapport à sa direction d'extension principale, aussi bien que sur les segments (13, 14) de bloc de profil de la première nervure de profil (2, 4) et sur les éléments de bloc de profil de la première rangée de blocs de profil que sur les segments de bloc de profil de la deuxième nervure de profil et sur les éléments (12, 15) de bloc de profil de la deuxième rangée (1, 5) de blocs de profil.

2. Profil de surface de roulement pour bandage pneumatique de véhicule selon les caractéristiques de la revendication 1, dans lequel la direction d'extension principale au moins de la première nervure de profil (2, 4) et de la première rangée de blocs de profil ainsi que de la deuxième rainure de profil (16, 17) est la direction périphérique du bandage pneumatique de véhicule.

3. Profil de surface de roulement pour bandage pneumatique de véhicule selon les caractéristiques de la revendication 2, dans lequel la direction d'extension principale tant de la première nervure de profil (2, 4) ou de la première rangée de blocs de profil que de la deuxième rainure de profil (16, 17) et la direction d'extension principale de la deuxième nervure de profil ou rangée (1, 5) de blocs de profil sont la direction périphérique du bandage pneumatique pour véhicule.

4. Profil de surface de roulement pour bandage pneumatique de véhicule selon les caractéristiques d'une ou plusieurs des revendications précédentes, dans lequel les parois (20, 21) de la deuxième rainure de profil (16, 17) s'étendent en ligne droite dans la direction d'extension principale de la deuxième rainure de profil (16, 17).

5. Profil de surface de roulement pour bandage pneumatique de véhicule selon les caractéristiques d'une ou plusieurs des revendications précédentes, dont la deuxième rainure de profil (16, 17) présente en coupe transversale par rapport à la direction d'extension principale de la deuxième rainure de profil (16, 17) un contour arrondi à la transition entre au moins l'une des parois latérales (20, 21) de la rainure et le fond (22) de la rainure.

6. Profil de surface de roulement pour bandage pneumatique de véhicule selon les caractéristiques d'une ou plusieurs des revendications 1 à 4, dans lequel la deuxième rainure de profil (16, 17) présente en coupe transversale par rapport à la direction d'extension principale de la deuxième rainure de profil (16, 17) un contour en dièdre à la transition entre au moins une des parois latérales (20, 21) de la rainure et le fond (22) de la rainure.

7. Profil de surface de roulement pour bandage pneumatique de véhicule selon les caractéristiques d'une ou plusieurs des revendications précédentes, dans lequel des repères (27) de contrôle de la profondeur du profil sont formés dans au moins une des parois latérales (20, 21) de la deuxième rainure de profil (16, 17).
